# EUROPÄISCHE PATENTANMELDUNG

(11) **EP 3 984 923 A1**
(43) Veröffentlichungstag der Anmeldung: **20.04.2022**
(21) Anmeldenummer: 21000287.9
(22) Anmeldetag: 11.10.2021
(51) Int. Cl.: B65G 47/29, B65G 47/31, B27B 31/00

(54) **VERFAHREN ZUM ZUFÜHREN VON LÄNGLICHEN WERKSTÜCKEN AUS HOLZ, KUNSTSTOFF UND DERGLEICHEN SOWIE ANLAGE ZUR DURCHFÜHRUNG DES VERFAHRENS**

(30) Priorität: 15.10.2020 DE 102020006458
(71) Anmelder: Weinig Dimter GmbH & Co. KG, 89257 Illertissen (DE)
(72) Erfinder: Reinbold, Georg, 88400 Biberach (DE)
(74) Vertreter: Kohl, Karl-Heinz

(57) **Zusammenfassung**

Beim Verfahren werden die länglichen Werkstücke zunächst zu einem Strang zusammengeführt, von dem nacheinander die Werkstücke einzeln abgezogen und in einem Austaktbereich (4) derart beschleunigt werden, dass zwischen dem abgezogenen Werkstück und dem restlichen Strang eine Lücke entsteht. Wenigstens ein Anschlag wird in die Lücke verstellt, der den restlichen Strang am Weitertransport hindert. Der Anschlag gibt den restlichen Strang zum Abziehen des nächsten Werkstückes dann frei, wenn das zuvor abgezogene Werkstück den Austaktbereich (4) verlässt. Die Werkstücke werden mit wenigstens einer Zuführeinrichtung zugeführt und mit wenigstens einer nachgeschalteten Austaktvorrichtung (4) weitertransportiert. Die Zuführeinrichtung und die Austaktvorrichtung haben fluchtend zueinander verlaufende und unabhängig voneinander antreibbare Transportmittel (8). Zwischen der Zuführeinrichtung (2) und der Austaktvorrichtung (4) ist wenigstens ein Anschlag vorgesehen, der in den Transportweg der Werkstücke verstellbar ist.

## Beschreibung

Die Erfindung betrifft ein Verfahren zum Zuführen von länglichen Werkstücken aus Holz, Kunststoff und dergleichen nach Anspruch 1 sowie eine Anlage zur Durchführung eines solchen Verfahrens nach Anspruch 7.

Es ist bekannt, aus länglichen Werkstücken Platten herzustellen, indem die an ihren Enden mit Keilzinken versehenen Werkstücke zu einem Strang zusammengesetzt und miteinander verklebt werden, der Strang anschließend in gewünschte Längen unterteilt und die so entstehenden Werkstückteile mit ihren Längsseiten aneinanderliegend zu Platten verleimt werden. Aus solchen Platten können beispielsweise Wandelemente, Türblätter und dergleichen hergestellt werden.

Der Erfindung liegt die Aufgabe zugrunde, ein solches Verfahren und eine solche Anlage so auszubilden, dass hohe Taktzahlen bei der Förderung der Werkstücke erreicht werden können.

Diese Aufgabe wird beim Verfahren erfindungsgemäß mit den Merkmalen des Anspruches 1 und bei der Anlage erfindungsgemäß mit den Merkmalen des Anspruches 7 gelöst.

Beim erfindungsgemäßen Verfahren werden die länglichen Werkstücke zunächst zu einem Strang zusammengeführt. Dann liegen die Werkstücke mit ihren Stirnseiten aneinanderliegend hintereinander. Von diesem Strang werden die Werkstücke jeweils einzeln abgezogen und einem Austaktbereich zugeführt. Das abgezogene Werkstück wird so beschleunigt, dass zwischen ihm und dem restlichen Teil des Stranges eine Lücke gebildet wird. Diese Lückenbildung kann dadurch erreicht werden, dass die Transportgeschwindigkeit des abgezogenen Werkstückes im Austaktbereich größer ist als im Zuführbereich, so dass aufgrund der unterschiedlichen Geschwindigkeiten beim Abziehen des Werkstückes die Lücke entsteht. Die Lückenbildung kann auch dadurch erreicht werden, dass die Zuführgeschwindigkeit bis zum Austaktbereich verringert wird, wodurch das Werkstück im Austaktbereich ebenfalls eine höhere Geschwindigkeit aufweist als im Zuführbereich. In diesem Falle wird die Beschleunigung dadurch erreicht, dass die Zuführgeschwindigkeit des Werkstückes geringer ist als im Austaktbereich.

Sobald die Lücke zwischen dem abgezogenen Werkstück und dem restlichen Teil des Werkstückstranges gebildet ist, wird in die Lücke der Anschlag verstellt, der verhindert, dass der restliche Teil des Stanges in den Austaktbereich gelangt. Der restliche Teil des Stranges verbleibt somit im Zuführbereich und wird dort zurückgehalten. Dadurch wird im Austaktbereich stets ein einzelnes Werkstück weitertransportiert. Sobald das Werkstück den Austaktbereich verlässt, gibt der Anschlag den restlichen Teil des Stranges frei, so dass nunmehr das nächste, am Stranganfang liegende Werkstück dem Austaktbereich zugeführt werden kann.

Solange sich der Anschlag in der Anschlagstellung befindet, können an den Strang weitere Werkstücke angeschlossen werden. Dadurch ist gewährleistet, dass im Strang vor dem Austaktbereich stets eine ausreichende Zahl von Werkstücken angeordnet ist, so dass die Zuführung der Werkstücke in den Austaktbereich nicht unterbrochen wird.

Auf diese Weise kann eine sehr hohe Taktzahl bezüglich des Durchsatzes der Werkstücke erreicht werden, ohne dass eine aufwändige Verfahrensführung erforderlich ist.

Bei einer vorteilhaften Ausführungsform ist die Zuführgeschwindigkeit der Werkstücke zur Bildung des Stranges geringer als die Geschwindigkeit des abgezogenen Werkstückes im Austaktbereich. Dies ist dann vorgesehen, wenn sich der Anschlag nicht in seiner Anschlagstellung befindet. Solange der Anschlag den Strang anhält, kann die Zuführgeschwindigkeit der Werkstücke durchaus höher sein, so dass nachfolgende Werkstücke rasch an den im Zuführbereich befindlichen Strang angeschlossen werden können.

Zu einer hohen Taktzahl trägt vorteilhaft bei, wenn das abgezogene Werkstück beim Verlassen des Austaktbereiches eine vorgegebene minimale Geschwindigkeit aufweist. Dadurch kann erreicht werden, dass alle Werkstücke, die den Austaktbereich verlassen, mit einer entsprechend hohen Geschwindigkeit austreten und der weiteren Verarbeitung zugeführt werden können.

Vorteilhaft ist es, wenn das abgezogene Werkstück die vorgegebene minimale Geschwindigkeit zumindest dann erreicht, wenn das in Transportrichtung vordere Ende des Werkstückes das Ende des Austaktbereiches erreicht.

Zur Erreichung der hohen Taktzahl ist es besonders vorteilhaft, wenn das abgezogene Werkstück die vorgegebene minimale Geschwindigkeit so lange beibehält, bis es den Austaktbereich verlassen hat.

Eine besonders bevorzugte Ausgestaltung ergibt sich, wenn die Geschwindigkeit des abgezogenen Werkstückes beim Durchlaufen des Austaktbereiches so eingestellt wird, dass es in einem vorgegebenen Geschwindigkeitsbereich und in einem vorgegebenen Zeitintervall den Austaktbereich verlässt.

Die erfindungsgemäße Anlage zeichnet sich dadurch aus, dass sie zur Zuführung der Werkstücke die wenigstens eine Zuführeinrichtung aufweist, der wenigstens eine Austaktvorrichtung für die Werkstücke nachgeschaltet ist. Die Transportmittel der Zuführeinrichtung und der Austaktvorrichtung liegen fluchtend zueinander und sind unabhängig voneinander antreibbar. Dadurch kann die Geschwindigkeit des Werkstückes sowohl im Zuführbereich als auch im Austaktbereich optimal aufeinander abgestimmt werden, um einen hohen Durchsatz der Werkstücke durch die Anlage zu erreichen. Die Transportmittel können beispielsweise Transportbänder sein, mit denen die länglichen Werkstücke zuverlässig transportiert werden können.

Zwischen der Zuführeinrichtung und der Austaktvorrichtung befindet sich wenigstens ein Anschlag, der in den Transportweg der Werkstücke verstellbar ist. Der Abstand zwischen der Zuführeinrichtung und der Austaktvorrichtung ist so gewählt, dass auch die kürzesten Werkstücke, die im Strang zusammengestellt werden, problemlos von der Zuführeinrichtung in die Austaktvorrichtung gelangen können.

Die Transportmittel in der Zuführeinrichtung sind so ausgebildet, dass sie die Werkstücke auch dann dem in der Zuführrichtung sich bildenden Strang zuführen können, wenn dieser am Anschlag anliegt. In diesem Falle bewegt sich das Transportmittel längs des Werkstückstranges.

Eine einfache Abstimmung der Geschwindigkeiten der Antriebe für die Zuführeinrichtung, die Austaktvorrichtung und den Anschlag ergibt sich, wenn die Antriebe an eine Steuerung angeschlossen sind. Dann kann mit der Steuerung die optimale Geschwindigkeit der Transportmittel in Abhängigkeit von der jeweiligen Transportsituation in der Anlage eingestellt werden.

Die minimale, in Transportrichtung der Werkstücke gemessene Länge der Austaktvorrichtung ergibt sich bei einer vorteilhaften Ausführungsform aus der maximalen Länge der Werkstücke sowie dem Bremsweg von der Austaktgeschwindigkeit in den Stillstand und der Beschleunigungsstrecke aus dem Stillstand auf die Austaktgeschwindigkeit.

Vorteilhaft ist der Austaktvorrichtung wenigstens eine Querfördereinrichtung nachgeschaltet, in der die Werkstücke quer zu ihrer Längsrichtung transportierbar sind.

Damit die quer zu ihrer Längsrichtung zu transportierenden Werkstücken gegeneinander ausgerichtet werden können, befindet sich in der Querfördereinrichtung wenigstens eine Ausrichteinheit. Sie liegt im Transportweg der Werkstücke, die bei ihrem Quertransport mit einer entsprechenden Stirnseite auf die Ausrichteinheit auflaufen und durch diese Anschlagstellung quer zu ihrer Transportrichtung, also in ihrer Längsrichtung, ausgerichtet werden. Dadurch wird in einfacher Weise erreicht, dass die Werkstücke, unabhängig von ihrer jeweiligen Länge, so zueinander ausgerichtet sind, dass die mit der Ausrichteinheit in Kontakt kommenden Stirnseiten der Werkstücke zumindest annähernd in der gleichen Ebene liegen.

Vorteilhaft ist es, wenn die Zuführeinrichtung und die Austaktvorrichtung nicht nur einen Werkstückkanal, sondern wenigstens zwei Werkstückkanäle aufweisen. Dann können gleichzeitig zwei oder mehr Werkstückstränge transportiert werden. Die Werkstücke dieser verschiedenen Stränge gelangen dann in die Querfördereirichtung, in der sie hintereinander angeordnet sind, bezogen auf ihre Längsrichtung.

Die erfindungsgemäße Anlage ist in vorteilhafter Weise einer Keilzinkenanlage vorgeschaltet, in der die Werkstücke zunächst an ihren Stirnseiten mit Keilzinken versehen und stirnseitig durch Verleimen zu einem endlosen Strang zusammengefügt werden. Von diesem Strang werden dann Teile in gewünschter Länge abgetrennt, die anschließend mit ihren Längsseiten aneinander liegend miteinander verleimt werden, wodurch entsprechende Platten gebildet werden.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird anhand eines in der Zeichnung dargestellten Ausführungsbeispieles näher erläutert. Es zeigen
- Fig. 1: eine Draufsicht auf eine erfindungsgemäße Anlage,
- Fig. 2: die erfindungsgemäße Anlage gemäß Fig. 1 in perspektivischer Darstellung,
- Fig. 3 bis 7: in schematischer Darstellung den Ablauf einer Vereinzelung und Austaktung von Werkstücken mit der erfindungsgemäßen Anlage.

Die im Folgenden beschriebene Anlage dient zum Zuführen und Vereinzeln von länglichen Werkstücken aus Holz, Kunststoff und dgl. Diese Werkstücke werden beispielsweise zur Herstellung von Platten verwendet, indem die Werkstücke hinter- und nebeneinander miteinander verleimt werden. Die Werkstücke habe in der Regel rechteckigen Querschnitt und sind rechteckförmig ausgebildet.

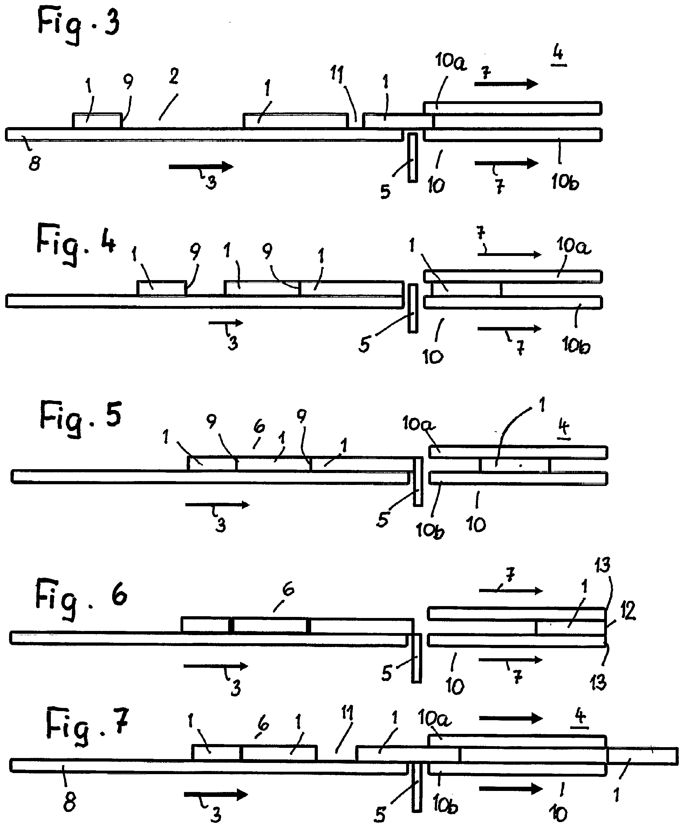

An Hand der Fig. 3 bis 7 wird zunächst der Ablauf der Vereinzelung der Werkstücke 1 beschreiben, die vorteilhaft lamellenförmig ausgebildet sind. Die Werkstücke 1 werden mittels einer Zuführeinrichtung 2 in ihrer Längsrichtung in Transportrichtung 3 in Richtung auf eine Austaktvorrichtung 4 transportiert.

Die Werkstücke 1 können gleiche, aber auch ungleiche Länge haben. Auf der Zuführeinrichtung 2 werden die Werkstücke 1 in Transportrichtung 3 hintereinander an einer Sperrvorrichtung 5 zunächst gestaut, so dass die zunächst mit Abstand hintereinander zugeführten Werkstücke 1 aneinander anschließen und einen Strang 6 bilden (Fig. 5).

In Transportrichtung 3 schließt an die Zuführeinrichtung 2 die Austaktvorrichtung 4 an. Mit ihr werden die Werkstücke 1 einzeln in Transportrichtung 7 in ihrer Längsrichtung transportiert. Die Transportgeschwindigkeit der Austaktvorrichtung 4 ist höher als die Zuführgeschwindigkeit der Werkstücke 1 in der Zuführeinrichtung 2. Die Werkstücke 1 werden in der Austaktvorrichtung 4 mit einer Geschwindigkeit transportiert, die wesentlich höher ist als die Geschwindigkeit der Werkstücke 1 in der Zuführeinrichtung 2.

Mit der Sperrvorrichtung 5, die sich im Bereich zwischen der Zuführeinrichtung 2 und der Austaktvorrichtung 4 befindet, werden die Werkstücke 1 in der Zuführeinrichtung 2 angehalten. Hierbei ist die Zuführeinrichtung 2 so ausgebildet, dass das Transportmittel 8 der Zuführeinrichtung 2, das vorteilhaft ein endlos umlaufendes Band ist, stets angetrieben ist. Dadurch werden die Werkstücke 1 stets in Transportrichtung 3 so lange transportiert, bis das in Transportrichtung vorderste Werkstück 1 an der Sperrvorrichtung 5 zur Ablage kommt und die nachfolgenden Werkstücke 1 mit ihren Stirnseiten aneinander liegen. Diese Situation ist beispielhaft in Fig. 5 dargestellt. Ein Vergleich der Fig. 4 und 5 zeigt, wie die Werkstücke 1 nacheinander in Transportrichtung 3 transportiert werden, bis sie mit ihren Stirnseiten aneinander liegen und den Strang 6 bilden.

Die Sperrvorrichtung 5 wird in den Transportweg der Werkstücke 1 verstellt, wenn in der Zuführeinrichtung 2 der Strang 6 gebildet werden soll. Die Länge des Stranges 6 hängt davon ab, wie lange sich die Sperrvorrichtung 5 in ihrer in den Fig. 4 und 5 dargestellten Anschlagstellung befindet.

Mit der Austaktvorrichtung 4 wird wie das Werkstück 1 einzeln in Transportrichtung 7 transportiert. Damit das Werkstück 1 in die Austaktvorrichtung 4 gelangt, wird die Sperrvorrichtung 5 in ihre Freigabestellung verstellt, in der sie den Strang 6 in der Zuführeinrichtung 2 freigibt. Dann kann das im Strang 6 in Transportvorrichtung 3 vordere Werkstück 1 durch das Transportmittel 8 der Zuführeinrichtung 2 der Austaktvorrichtung 4 zugeführt werden (Fig. 3).

Sobald dieses Werkstück 1 in den Bereich der Austaktvorrichtung 4 gelangt, wird es von einem Transportmittel 10 der Austaktvorrichtung 4 erfasst und beschleunigt in Transportrichtung 7 transportiert. Da das Transportmittel 10 eine höhere Transportgeschwindigkeit hat als das Transportmittel 8 der Zuführeinrichtung 23, bildet sich zwischen dem der Austaktvorrichtung 4 zugeführten Werkstück 1 und dem nachfolgenden Werkstück 1 eine Lücke 11, wodurch die Sperrvorrichtung 5 nach Passieren des vorderen Werkstückes 1 in die Lücke 11 zurückfahren kann (Fig. 4). Dadurch kann das nachfolgende Werkstück 1 nicht in Richtung auf die Austaktvorrichtung 4 weitertransportiert werden, sondern schlägt an der Sperrvorrichtung 5 an (Fig. 5).

In der Austaktvorrichtung 4 wird das Werkstück 1 so beschleunigt, dass die Lücke 11 ausreichend groß ist, damit die Sperrvorrichtung 5 ausreichend Zeit hat, in die Lücke 11 einzufahren und so das nachfolgende Werkstück 1 am Weitertransport zu hindern.

Solange das Werkstück 1 in der Austaktvorrichtung 4 transportiert wird, werden in der Zuführeinrichtung 2 die Werkstücke 1 nachgeführt, so dass sich an der Sperrvorrichtung 5 wieder ein Strang 6 bildet (Fig. 5).

Wie anhand von Fig. 5 beispielhaft dargestellt ist, kann das Werkstück 1 in der Austaktvorrichtung 4 bei Bedarf angehalten werden, indem das Transportmittel 10 gestoppt wird.

Die Austaktvorrichtung 4 kann so gesteuert werden, dass das Werkstück 1 in einem vorgegebenen Geschwindigkeitsbereich und in einem vorgegebenen Zeitintervall die Austaktvorrichtung 4 verlässt. Die minimale, in Transportrichtung 7 gemessene Länge der Austaktvorrichtung 4 ergibt sich aus der maximalen Länge der Werkstücke 1, dem Bremsweg von der Geschwindigkeit der Austaktvorrichtung 4 in den Stillstand und der Beschleunigungstrecke aus dem Stillstand auf die Austaktgeschwindigkeit.

Sobald das in Transportrichtung 7 vordere Ende 12 des Werkstückes 1 das in Transportrichtung 7 vordere Ende 13 der Austaktvorrichtung 4 erreicht (Fig. 6), kann die Sperrvorrichtung 5 deaktiviert werden, um den Weg für das nächste Werkstück 1 von der Zuführeinrichtung 2 in die Austaktvorrichtung 4 freizugeben. Dann kann das in der Zuführeinrichtung 2 zunächst an der Sperrvorrichtung 5 anliegende Werkstück 1 durch das Transportmittel 8 der Zuführeinrichtung 2 der Austaktvorrichtung 4 zugeführt werden. Gleichzeitig wird das in der Austaktvorrichtung 4 befindliche Werkstück 1 weitertransportiert.

Fig. 7 zeigt die Situation, in der das Werkstück 1 die Austaktvorrichtung 4 gerade verlassen und das nachfolgende Werkstück 1 teilweise vom Transportmittel 10 der Austaktvorrichtung 4 erfasst worden ist. Da die Transportgeschwindigkeit der Austaktvorrichtung 4 größer ist als die Transportgeschwindigkeit des Transportmittels 8 der Zuführeinrichtung 2, wird in der beschriebenen Weise die Lücke 11 zwischen dem zugeführten Werkstück 1 und dem nachfolgenden Werkstück 1 des Stranges 6 gebildet, so dass die Sperrvorrichtung 5 wieder in ihre Anschlagposition verstellt werden kann, sobald das in die Austaktvorrichtung 4 einlaufende Werkstück 1 die Sperrvorrichtung 5 passiert hat.

Die Sperrvorrichtung 5 kann bevorzugt dann in ihre Anschlagstellung verstellt werden, wenn das Werkstück 1 sich vollständig innerhalb der Austaktvorrichtung 4 befindet. Grundsätzlich ist es auch möglich, die Zuführeinrichtung 2 und die Austaktvorrichtung 4 so vorzusehen, dass die Sperrvorrichtung 5 bereits dann in ihre Anschlagstellung gelangen kann, wenn das in Transportrichtung 3 vordere Werkstück 1 noch nicht vollständig in die Austaktvorrichtung 4 aufgenommen worden ist.

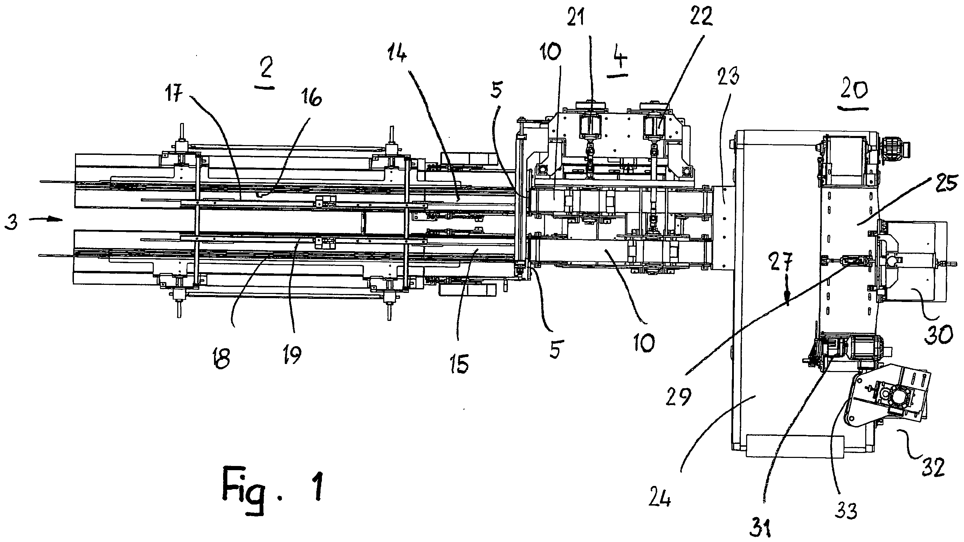

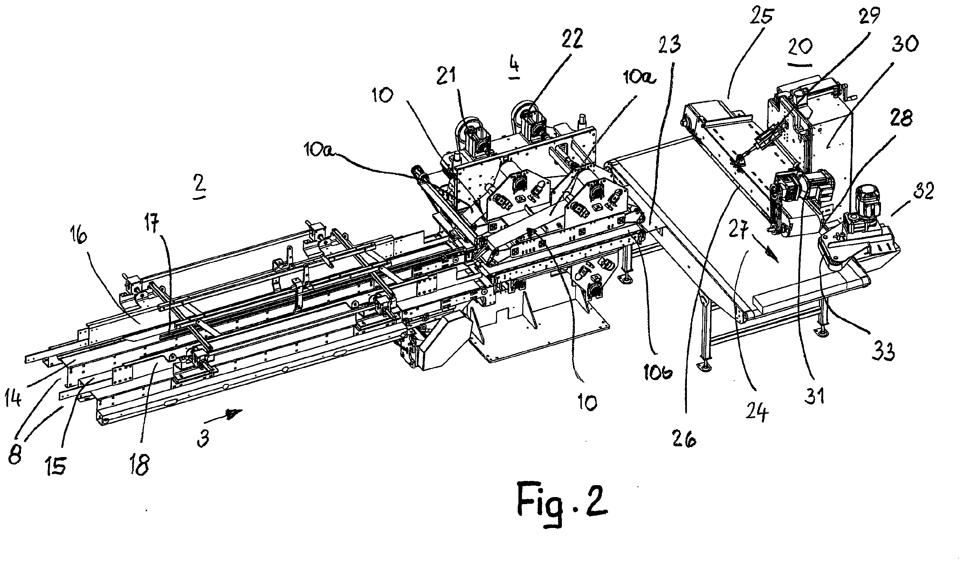

Mit dem beschriebenen Verfahren ist es möglich, die Werkstücke 1 optimal innerhalb kurzer Zeit einer nachfolgenden Bearbeitung zuzuführen, die anhand der Fig. 1 und 2 noch erläutert werden wird.

Bei der beschriebenen Verfahrensweise werden in der Austaktvorrichtung 4 die Werkstücke 1 mit einer höheren Geschwindigkeit transportiert als in der Zuführeinrichtung 2. Sobald das Werkstück 1 von der Austaktvorrichtung 4 erfasst worden ist, kann das Werkstück in der Austaktvorrichtung 4 definiert angehalten werden. Während des Transports der Werkstücke 1 durch die Austaktvorrichtung 4 können in der Zuführeinrichtung 2 die Werkstücke 1 dynamisch nachgefahren werden, wobei sie an der Sperrvorrichtung 5 den Strang 6 bilden, indem die Werkstücke 1 mit ihren Stirnseiten aneinander liegen. Die Werkstücke 1 können gleich lang sein. In der Regel jedoch haben die Werkstücke 1 unterschiedliche Länge.

Die Austaktvorrichtung 4 ist so ausgeführt, dass jedes Werkstück 1 mit einer festgelegten minimalen Geschwindigkeit die Austaktvorrichtung 4 verlässt. Dies bedeutet, dass die in Transportrichtung 7 vordere Stirnseite 12 der Werkstücke 1 diese vorgegebene minimale Geschwindigkeit aufweist, wenn diese Stirnseite 12 das Ende 13 der Austaktvorrichtung 4 erreicht. Diese minimale Geschwindigkeit wird so lange nicht unterschritten, bis das Werkstück 1 die Austaktvorrichtung 4 verlassen hat.

Grundsätzlich besteht die Möglichkeit, die Transportgeschwindigkeit des Transportmittels 8 der Zuführeinrichtung 2 zu variieren. Dies ist besonders dann vorteilhaft, wenn lange Werkstücke 1 transportiert werden und/oder bei der Zuführung der Werkstücke 1 in der Zuführeinrichtung 2 unterschiedlich große Abstände zwischen hintereinander liegenden Werkstücke 1 vorhanden sind. Durch Steuerung der Transportgeschwindigkeit kann erreicht werden, dass die Werkstücke 1 in der Zuführeinrichtung 2 einen ausreichend langen Strang 6 bilden, solange sich die Sperrvorrichtung 5 in ihrer Anschlagstellung befindet.

Um die Position des Werkstückes 1 beim Einfahren in die Austaktvorrichtung 4 bzw. beim Verlassen der Austaktvorrichtung 4 zu erfassen, werden vorteilhaft entsprechende Sensoren eingesetzt. So erfasst wenigstens ein Sensor die Stirnseite 12 des Werkstückes 1 in dem Augenblick, in dem es das Ende 13 der Austaktvorrichtung 4 erreicht (Fig.6). Dann sendet der Sensor an eine Steuerung ein entsprechendes Signal, so dass die Steuerung die Sperrvorrichtung 5 in ihre Freigabestellung verstellen kann (Fig. 6 und 7).

Vorteilhaft ist wenigstens ein weiterer Sensor vorgesehen, der überwacht, ob die Lücke 11 zwischen dem in der Austaktvorrichtung 4 liegenden Werkstück 1 und dem nachfolgenden, sich auf der Zuführeinrichtung 2 befindlichen Werkstück 1 ausreichend groß ist, um die Sperrvorrichtung 5 in die Anschlagstellung zu verstellen.

Sollte die Lücke 1 zu klein sein, dann erhält die Steuerung von diesem Sensor ein entsprechendes Signal, damit die Steuerung entweder die Geschwindigkeit des Transportmittels 8 verringert und/oder die Transportgeschwindigkeit des Transportmittels 10 erfüllt. Durch eine solche Regelung kann während des Betriebes zuverlässig sichergestellt werden, dass stets nur ein Werkstück 1 in die Austaktvorrichtung 4 gelangt.

Die Fig. 1 und 2 zeigen eine beispielhafte Anlage mit der Zuführeinrichtung 2 und der Austaktvorrichtung 4. Die dargestellte Anlage ist allerdings nur als mögliche Ausführungsform zu verstehen. Die beschriebene Gestaltung ist daher nicht beschränkend anzusehen.

Die Anlage ist so ausgebildet, dass auf ihr die Werkstücke 1 in zwei zueinander parallelen Bahnen mit Abstand nebeneinander in Transportrichtung 3 transportiert werden. Für die Werkstücke 1 sind zwei parallel zueinander verlaufende Führungsbahnen 14, 15 vorgesehen, die sich in Transportrichtung 3 mit Abstand nebeneinander erstecken. Vorteilhaft werden die Führungsbahnen 14, 15 durch endlos umlaufende Riemen oder Bänder gebildet, auf denen die Werkstücke 1 lose aufliegen. Jede Führungsbahn 14, 15 kann eine Längsführung 16, 17; 18, 19 für die Werkstücke 1 aufweisen. Diese Längsführungen können so vorgesehen sein, dass die Werkstücke 1 während ihres Transportes mit zumindest einer Längsseite an ihnen anliegen.

An dem in Transportrichtung 3 vorderen Ende befindet sich die Sperrvorrichtung 5, die beispielhaft als Anschlagklinke ausgebildet ist. Sie kann aus der Anschlagstellung in die Freigabestellung beispielsweise nach oben oder unten geschwenkt bzw. verschoben oder seitlich weggeschoben werden.

Die Austaktvorrichtung 4 weist die beiden Transportmittel 10 auf, die fluchtend zu den Führungsbahnen 14, 15 der Transportmittel 8 liegen.

Die Transportmittel 10 werden jeweils durch zwei übereinanderliegende, endlos umlaufende Beschleunigungsbänder 10a, 10b gebildet, zwischen denen die Werkstücke 1 beim Transport durch die Austaktvorrichtung 4 mitgenommen werden. Die beiden Transportbänder 10a, 10b sind in einem solchen Abstand übereinander angeordnet, dass die zwischen den einander gegenüberliegenden Trums dieser Transportbänder angeordneten Werkstücke 1 zuverlässig mitgenommen werden.

Die beiden Transportmittel 10 der Austaktvorrichtung 4 werden vorteilhaft unabhängig voneinander angetrieben, sodass die Werkstücke in den beiden Reihen gezielt der nachgeschalteten Querfördereinrichtung 20 zugeführt werden können. Die beiden Antriebe 21, 22 für die Transportmittel 10 sind mit der Steuerung der Anlage verbunden, so dass die Transportmittel 10 je nach Bedarf gesteuert bzw. geregelt werden können.

Die Werkstücke 1 werden durch die Zuführeinrichtung 2 und die Austaktvorrichtung 4 in der beschriebenen Weise in ihrer Längsrichtung transportiert. Nach dem Austritt aus der Austaktvorrichtung 4 gelangen die Werkstücke in die Querfördereinrichtung 20. Mit ihr werden die Werkstücke senkrecht zu ihrer Längsrichtung transportiert. Zwischen der Austaktvorrichtung 4 und der Querfördereinrichtung 20 befindet sich wenigstens eine Übergabebahn 23, die im Beispielsfall durch ein Blech gebildet ist. Auf der Übergabebahn 23 werden die Werkstücke 1 von der Austaktvorrichtung 4 auf einen Auflagetisch 24 der Querfördereinrichtung 20 in ihrer Längsrichtung transportiert. Im Zuführbereich der Werkstücke 1 befindet sich eine Fangeinheit 25, die mit wenigstens einem endlos umlaufenden Band 26 versehen ist. Es fördert die Werkstücke senkrecht zur Transportrichtung 3 in Transportrichtung 27.

Die Fangeinheit 25 kann um eine in Transportrichtung 27 liegende Achse 28 mit Hilfe wenigstens eines Schwenkantriebes 29 geschwenkt werden. Er ist beispielsweise eine Kolben-Zylinder-Einheit, die an einem Ständer 30 sowie an der Fangeinheit 25 angelenkt ist.

Damit die Werkstücke 1 unter die Fangeinheit 25 gelangen können, ist diese bei der Zuführung so weit aufwärts geschwenkt, dass die Werkstücke unter das Förderband 26 gelangen können. In Zuführrichtung der Werkstücke 1 ist die Fangeinheit 25 vorteilhaft mit einem (nicht dargestellten) Anschlag versehen, an dem die Werkstücke mit einem Ende zur Anlage kommen. Mit dem Förderband 26 werden die Werkstücke 1 anschließend nach Absenken der Fangeinheit 25 quer zu ihrer Längsrichtung in Transportrichtung 27 transportiert.

Da auf der Zuführeinrichtung 2 zwei Stränge von Werkstücken 1 gebildet werden, gelangen auf den Auflagetisch 24 die Werkstücke 1 von beiden Strängen.

Zum Antrieb des Förderbandes 26 ist ein Antrieb 31 vorgesehen, der vorteilhaft an die (nicht dargestellte) Steuerung der Anlage angeschlossen ist. Dadurch kann das Förderband 26 vorteilhaft gesteuert so angetrieben werden, dass die Werkstücke 1 zuverlässig transportiert werden.

Der Fangeinheit 25 ist in Transportrichtung 27 eine Ausrichteinheit 32 nachgeschaltet. Sie dient dazu, die von der Fangeinheit 25 transportierten Werkstücke so ihrer Längsrichtung auszurichten, dass diese Werkstücke anschließend geordnet einer (nicht dargestellten) Keilzinkenanlage zugeführt werden können.

Die Ausrichteinheit 32 hat wenigstens einen endlos umlaufenden Ausrichtriemen 33, der um senkrecht zum Auflagetisch 24 liegende Achsen bewegbar ist. Der Ausrichtriemen 33 liegt unter einem Winkel schräg zur Transportrichtung 27. Die die Fangeinheit 25 verlassenden Werkstücke gelangen mit ihrer in den Fig. 1 und 2 rechten Stirnseite in Kontakt mit dem Ausrichtriemen 33, der infolge seiner Schräglage in Bezug auf die Transportrichtung 27 die Werkstücke jeweils in den Fig. 1 und 2 nach links in ihre Längsrichtung verschiebt. Auf diese Weise werden die Werkstücke so gegeneinander ausgerichtet, dass ihre in den Fig. 1 und 2 rechten Stirnseiten nach Verlassen der Ausrichteinheit 32 zumindest annähernd zu einer parallel zur Transportrichtung 27 liegenden Ebene liegen. Auf diese Weise gelangen die Werkstücke 1 geordnet und ausgerichtet in die Keilzinkenanlage, in welcher die Werkstücke in bekannter Weise wieder in ihrer Längsrichtung hintereinander zu einem Strang zusammengesetzt werden, wobei an den Stirnseiten der hintereinander liegenden Werkstücke die Zinken eingefräst werden.

Die Transportmittel 10 der Austaktvorrichtung 4 können so gesteuert werden, dass die Werkstücke mit hoher Taktzahl geordnet der Querfördereinrichtung 20 übergeben werden können. Die Transportgeschwindigkeit in der Austaktvorrichtung 4 richtet sich danach, ob die Werkstücke 1 der Querfördereinrichtung 20 in geordneter Weise übergeben werden können. So können die Transportmittel 10 beispielsweise angehalten werden, wenn sich im Zuführbereich der Werkstücke in der Querfördereinrichtung 20 noch Werkstücke befinden. Gegebenenfalls reicht es aus, in solchen Fällen die Geschwindigkeit der Transportmittel 10 zu verringern, damit die aus der Austaktvorrichtung 4 kommenden Werkstücke in einen freien Bereich der Querfördereinrichtung 20 gelangen.

Vorteilhaft wird der Zuführbereich der Werkstücke 1 in die Querfördereinrichtung 20 durch Sensoren überwacht, die sicherstellen, dass aus der Austaktvorrichtung 4 keine Werkstücke zugeführt werden, solange sich in der Querfördereinrichtung 20 im Zuführbereich noch Werkstücke befinden. Da die entsprechenden Antriebe in der beschriebenen Weise an die Steuerung angeschlossen sind, können die einzelnen Transportmittel 10, 26 optimal aufeinander abgestimmt werden.

Beim beschriebenen Ausführungsbeispiel erfolgt die Beschickung mit den Werkstücken 1 zweikanalig. Selbstverständlich kann die Beschickung auch ein- oder mehrkanalig erfolgen. Durch den Einsatz mehrerer solcher Einheiten ergibt sich in einfacher Weise die Möglichkeit, hohe Taktzahlen für die Zuführung der Werkstücke zu erreichen.

## Patentansprüche

1. Verfahren zum Zuführen von länglichen Werkstücken (1) aus Holz, Kunststoff und dergleichen, die zunächst zu einem Strang (6) zusammengeführt werden, von dem nacheinander die Werkstücke (1) einzeln abgezogen und in einem Austaktbereich (4) derart beschleunigt werden, dass zwischen dem abgezogenen Werkstück (1) und dem restlichen Strang (6) eine Lücke (11) entsteht, in die wenigstens ein Anschlag (5) verstellt wird, der den restlichen Strang (6) am Weitertransport hindert, und dass der Anschlag (5) den restlichen Strang (6) zum Abziehen des nächsten Werkstückes (1) freigibt, wenn das zuvor abgezogene Werkstück (1) den Austaktbereich (4) verlässt.

2. Verfahren nach Anspruch 1,
**dadurch gekennzeichnet, dass** die Zuführgeschwindigkeit des Werkstückes (1) zur Bildung des Stranges (6) geringer ist als die Geschwindigkeit des abgezogenen Werkstückes (1) im Austaktbereich (4).

3. Verfahren nach Anspruch 1 oder 2,
**dadurch gekennzeichnet, dass** das abgezogene Werkstück (1) beim Verlassen des Austaktbereiches (4) eine vorgegebene minimale Geschwindigkeit aufweist.

4. Verfahren nach Anspruch 3,
**dadurch gekennzeichnet, dass** das abgezogene Werkstück (1) die vorgegebene minimale Geschwindigkeit zumindest dann erreicht, wenn sein in Transportrichtung (7) vorderes Ende (12) das Ende (13) des Austaktbereiches (4) erreicht.

5. Verfahren nach Anspruch 4,
**dadurch gekennzeichnet, dass** das abgezogene Werkstück (1) die vorgegebene minimale Geschwindigkeit so lange beibehält, bis es den Austaktbereich (4) verlassen hat.

6. Verfahren nach einem der Ansprüche 1 bis 5,
**dadurch gekennzeichnet, dass** die Geschwindigkeit des abgezogenen Werkstückes (1) beim Durchlaufen des Austaktbereiches (4) so eingestellt wird, dass es in einem vorgegebenen Geschwindigkeitsbereich und in einem vorgegebenen Zeitintervall den Austaktbereich (4) verlässt.

7. Anlage zur Durchführung des Verfahrens nach einem der Ansprüche 1 bis 6, mit wenigstens einer Zuführeinrichtung (2) und wenigstens einer nachgeschalteten Austaktvorrichtung (4) für die Werkstücke (1), von denen die Zuführeinrichtung (2) wenigstens ein Transportmittel (8) und die Austaktvorrichtung (4) wenigstens ein Transportmittel (10) aufweisen, wobei die Transportmittel (8,10) fluchtend zueinander verlaufen und unabhängig voneinander antreibbar sind, wobei zwischen der Zuführeinrichtung (2) und der Austaktvorrichtung (4) wenigstens ein in den Transportweg der Werkstücke (1) verstellbarer Anschlag (5) vorgesehen ist.

8. Anlage nach Anspruch 7,
**dadurch gekennzeichnet, dass** die Antriebe für die Zuführeinrichtung (2), die Austaktvorrichtung (4) und den Anschlag (5) an eine Steuerung angeschlossen sind.

9. Anlage nach Anspruch 7 oder 8,
**dadurch gekennzeichnet, dass** die minimale, in Transportrichtung (7) gemessene Länge der Austaktvorrichtung (4) der maximalen Länge der Werkstücke (1) sowie dem Bremsweg von der Austaktgeschwindigkeit in den Stillstand und der Beschleunigungsstrecke aus dem Stillstand auf die Austaktgeschwindigkeit entspricht.

10. Anlage nach einem der Ansprüche 7 bis 9,
**dadurch gekennzeichnet, dass** der Austaktvorrichtung (4) wenigstens eine Querfördereinrichtung (20) nachgeschaltet ist, in der die Werkstücke (1) quer zu ihrer Längsrichtung transportierbar sind.

11. Anlage nach Anspruch 10,
**dadurch gekennzeichnet, dass** die Querfördereinrichtung (20) mit wenigstens einer Ausrichteinheit (32) versehen ist, die im Transportweg der Werkstücke (1) liegt und die Werkstücke (1) in ihrer Längsrichtung ausrichtet.

12. Anlage nach einem der Ansprüche 7 bis 11,
**dadurch gekennzeichnet, dass** die die Anlage einer Keilzinkenanlage vorgeschaltet ist.
